Europäisches Patentamt

European Patent Office

Office européen des brevets

(19)

(11) Numéro de publication : **0 689 062 A1**

(12) # DEMANDE DE BREVET EUROPEEN

(21) Numéro de dépôt : **95401437.9**

(22) Date de dépôt : **19.06.95**

(51) Int. Cl.$^6$ : **G01S 5/12, H04Q 7/38**

(30) Priorité : **21.06.94 FR 9407591**

(43) Date de publication de la demande :
**27.12.95 Bulletin 95/52**

(84) Etats contractants désignés :
**AT BE CH DE DK ES GB IT LI NL SE**

(71) Demandeur : **ALCATEL MOBILE
COMMUNICATION FRANCE
10, rue de la Baume
F-75008 Paris (FR)**

(72) Inventeur : **Chiodini, Alain
59, Avenue Edouard Vaillant
F-92100 Boulogne (FR)**

(74) Mandataire : **El Manouni, Josiane et al
SOSPI
14-16, rue de la Baume
F-75008 Paris (FR)**

(54) **Procédé de radiolocalisation d'un mobile à l'aide d'un satellite, dispositif de radiolocalisation, et procédé d'émission correspondants**

(57)    L'invention concerne un procédé de radiolocalisation géographique d'une station mobile évoluant à l'intérieur de la zone de couverture radioélectrique d'un satellite, comprenant les étapes suivantes :

— détermination (33) de la distance instantanée d entre ledit satellite et ladite station mobile ;

— calcul de (34) l'angle $\phi$ d'élévation instantanée dudit satellite, à partir de ladite distance instantanée d, de l'altitude h du satellite et du rayon terrestre R ;

— détermination (35) du déplacement Doppler $\delta$ ;

— calcul (36) de l'angle $\theta$ entre les projections sur la surface terrestre de la trajectoire (23) suivie par ledit satellite et de la droite (24) passant par ledit satellite et ladite station mobile, à partir dudit déplacement Doppler $\delta$ et dudit angle $\phi$ d'élévation instantanée ;

— détermination (38) de la localisation de ladite station mobile, à partir de ladite distance instantanée d, dudit angle $\phi$ d'élévation instantanée et dudit angle $\theta$.

Fig. 2

Le domaine de l'invention est celui de la localisation géographique de mobiles, à l'aide de techniques de radiolocalisation. D'une façon générale, ces techniques permettent de faire le point dans un mobile ou, en d'autres termes, de déterminer la position de ce mobile dans l'espace à un instant donné, au moyen de liaisons radioélectriques entre le mobile et un ou plusieurs points de référence.

Il existe déjà de nombreux systèmes de radiolocalisation. Ceux-ci sont essentiellement destinés à des applications maritimes et aéronautiques. Ces systèmes connus reposent sur la mise en oeuvre d'une structure d'émission spécifique, réseau d'émetteurs terrestres (OMEGA ou LORAN C par exemple) ou constellation de satellites (TRANSIT par exemple).

On connaît également le système GPS (Global Positionning System), qui peut être utilisé dans tout type de mobile. Il met en oeuvre une constellation de 24 satellites, répartis de façon qu'un mobile reçoive à tout instant des signaux émis par trois satellites distincts. En effet, dans ce système GPS, il faut trois satellites pour effectuer une localisation.

Un inconvénient majeur de ces systèmes dédiés connus est qu'il nécessite des investissements très élevés, tant en ce qui concerne l'implantation que l'entretien du réseau d'émission.

Ces coûts d'infrastructure se répercutent également sur les appareils de localisation. Par ailleurs, ceux-ci doivent comprendre des moyens de calcul puissants et précis. En effet, ils ont pour objet d'atteindre des précisions de l'ordre de quelques dizaines de mètres.

Ces précisions présentent des intérêts dans certaines applications. Toutefois, il existe un besoin différent, visant à fournir une localisation plus grossière (par exemple au niveau d'une cellule d'un réseau cellulaire de radiotéléphonie), à un coût beaucoup plus faible. Aucun système ne répond actuellement à ce besoin.

L'invention a notamment pour objectif de répondre à ce besoin, et de pallier les différents inconvénients de l'état de la technique.

Plus précisément, un objectif de l'invention est de fournir un procédé de radiolocalisation mettant en oeuvre une infrastructure satellitaire simplifiée. En d'autres termes, l'invention a pour objectif de fournir un tel procédé ne nécessitant la réception de signaux que d'un seul satellite (et non trois, comme dans les systèmes connus).

Un autre objectif de l'invention est de fournir un tel procédé, permettant de concevoir et réaliser des dispositifs de localisation simples et peu coûteux. Notamment, un objectif de l'invention est de fournir un tel procédé, qui puisse être mis en oeuvre aisément dans des appareils de radiotéléphonie.

L'invention a également pour objectif de fournir un tel procédé, ne nécessitant pas la mise en oeuvre d'une infrastructure particulière, mais qui puisse au contraire s'appuyer sur une infrastructure existante, telle que, par exemple, le réseau Globalstar.

Ces objectifs, ainsi que d'autres qui apparaîtront par la suite, sont atteints selon l'invention par un procédé de radiolocalisation géographique d'une station mobile évoluant à l'intérieur de la zone de couverture radioélectrique d'un satellite, comprenant les étapes suivantes :
- détermination de la distance instantanée d entre ledit satellite et ladite station mobile ;
- calcul de l'angle φ d'élévation instantanée dudit satellite, à partir de ladite distance instantanée d, de l'altitude h du satellite et du rayon terrestre R ;
- détermination du déplacement Doppler δ ;
- calcul de l'angle θ entre les projections sur la surface terrestre de la trajectoire suivie par ledit satellite et de la droite passant par ledit satellite et ladite station mobile, à partir dudit déplacement Doppler δ et dudit angle φ d'élévation instantanée;
- détermination de la localisation de ladite station mobile, à partir de ladite distance instantanée d, dudit angle φ d'élévation instantanée et dudit angle θ.

Ainsi, selon l'invention, la localisation d'un mobile est possible à l'aide d'un satellite unique. Cela est rendu possible, notamment par la détermination et la prise en compte du déplacement Doppler.

De façon avantageuse, ladite étape de calcul de l'angle θ comprend les étapes suivantes :
- calcul de la valeur de cos(θ), à partir de l'équation du déplacement Doppler :

$$\delta = v_s/c.f_p.\cos(\theta).\cos(\varphi)$$

où : $v_s$ est la vitesse de défilement du satellite ;
c est la célérité de la lumière ;
$f_p$ est la fréquence porteuse du signal transmis ; et
- levée de l'incertitude sur le signe dudit angle θ.

En effet, on constate que le signe de θ varie selon que le mobile se trouve à droite ou à gauche de la projection de la trajectoire suivie par le satellite dans la zone de couverture.

Préférentiellement, la levée de cette incertitude sur le signe de θ est rendue possible par l'ajout au procédé des étapes suivantes :
- découpage de ladite zone de couverture radioélectrique en au moins deux régions distinctes, une première région correspondant à une valeur positive de θ et une seconde région correspondant à une valeur négative de θ;
- affectation d'un signal de synchronisation distinct à chacune desdites régions.

Dans ce cas, ladite étape de levée de l'incertitude comprend une étape d'analyse du signal de synchronisation reçu, de façon à déterminer la région dans laquelle se trouve ladite station mobile, et donc le signe

de $\theta$.

De façon préférentielle, la séparation entre lesdites régions est définie par la trajectoire dudit satellite.

Avantageusement, ladite étape de détermination de la distance instantanée d comprend une étape classique de mesure du temps de propagation d'un signal transmis entre ledit satellite et ladite station mobile.

Préférentiellement, ladite étape de détermination du déplacement Doppler $\delta$ est réalisée à l'aide d'un signal pilote constitué par la juxtaposition de deux éléments de signaux d'égales durées et temporellement symétriques.

Ce procédé peut notamment être mis en oeuvre dans le cadre d'un service de radiotéléphonie, tel que le système Globalstar.

L'invention concerne également les dispositifs de radiolocalisation d'une station mobile, mettant en oeuvre le procédé décrit ci-dessus, ainsi qu'un procédé correspondant d'émission de signaux numériques à partir d'un satellite, comprenant les étapes suivantes :

- découpage de ladite zone de couverture radioélectrique en deux régions distinctes, de part et d'autre de la trajectoire dudit satellite ;
- affectation d'un signal de synchronisation distinct à chacune desdites régions.

D'autres caractéristiques et avantages de l'invention apparaîtront à la lecture de la description suivante d'un mode de réalisation préférentiel de l'invention, donné à titre d'exemple illustratif et non limitatif, et des dessins annexés, dans lesquels :

- la figure 1 illustre schématiquement la zone de couverture radioélectrique d'un satellite ;
- la figure 2 représente les trois paramètres d, $\varphi$ et $\theta$ permettant la localisation d'un mobile par rapport à un satellite ;
- la figure 3 est un schéma synoptique présentant le procédé de localisation de l'invention ;
- la figure 4 illustre le principe mis en oeuvre selon l'invention pour lever incertitude sur le signe de l'angle d'élévation instantanée ;
- la figure 5 est un cas particulier de la figure 4, correspondant au système de radiotéléphonie Globalstar,
- les figures 6 à 8 illustrent une méthode de détermination du déplacement Doppler :
  - . la figure 6 illustre la structure d'un signal pilote de type conu, pour un système de radiotéléphonie AMRC;
  - . la figure 7 illustre la structure d'un signal pilote permettant la mise en oeuvre de cette méthode de détermination du déplacement Doppler, également pour un système de radiotéléphonie AMRC;
  - . la figure 8 présente un schéma synoptique d'un dispositif de synchronisation fréquentielle et temporelle mettant en oeuvre le signal de la figure 7.

La localisation géographique d'une station mobile est l'un des services proposés pour les futurs systèmes de radiotéléphonie par satellite. Plus généralement, la radiolocalisation par satellite est une technique appelée à se développer. L'invention propose un procédé de radiolocalisation nouveau, ne nécessitant la réception de signaux émis que par un seul satellite.

Le mode de réalisation décrit ci-dessous est notamment prévu pour être mis en oeuvre dans le cadre du système Globalstar, système cellulaire AMRC visant à offrir une couverture mondiale. Il se compose de trois segments :

- le segment spatial, formé de 48 satellites en orbite basse (1 414 km), de 8 satellites de secours, et de 2 centres de contrôle de la constellation,
- les terminaux, portatifs, installés sur des mobiles ou fixes, mono-mode (c'est à dire seulement capables d'inter-opérer avec Globalstar) ou bi-mode (c'est-à-dire capables d'inter-opérer avec Globalstar et un système cellulaire terrestre comme le GSM ou le DCS 1800),
- les stations de connexion, qui permettent d'établir des liaisons avec les réseaux publics commutés, mais aussi de gérer la mobilité, gestion qui permet la mise à jour de bases de données indiquant à la fois où se trouve un mobile et les attributs des services auxquels il a souscrit. Cette capacité permet une intégration aux réseaux mobiles. Il est ainsi possible aux abonnés bi-mode de conserver leur numéro mobile et d'être appelés indifféremment dans le réseau de terre ou dans le réseau satellite sans avoir à intervenir.

Le service de base dans Globalstar est la téléphonie. Globalstar permet également la transmission de données. Globalstar va aussi permettre l'offre d'un service nouveau, l'extension de l'itinérance au monde entier. Toutefois, il est clair que cette extension se limitera aux zones de service (c'est-à-dire en dehors des parties denses des agglomérations dans lesquelles en principe la couverture est fournie par un réseau cellulaire). En dehors de ces zones de service, il sera possible de disposer d'un signal d'appel fourni par un service de radio-messagerie unilatérale.

Du fait de la transparence et de l'intégration aux réseaux publics, il sera également possible de disposer des mêmes services que ceux offerts par les réseaux des opérateurs cellulaires.

L'invention ajoute encore une fonctionnalité à ce système, à savoir la localisation des mobiles.

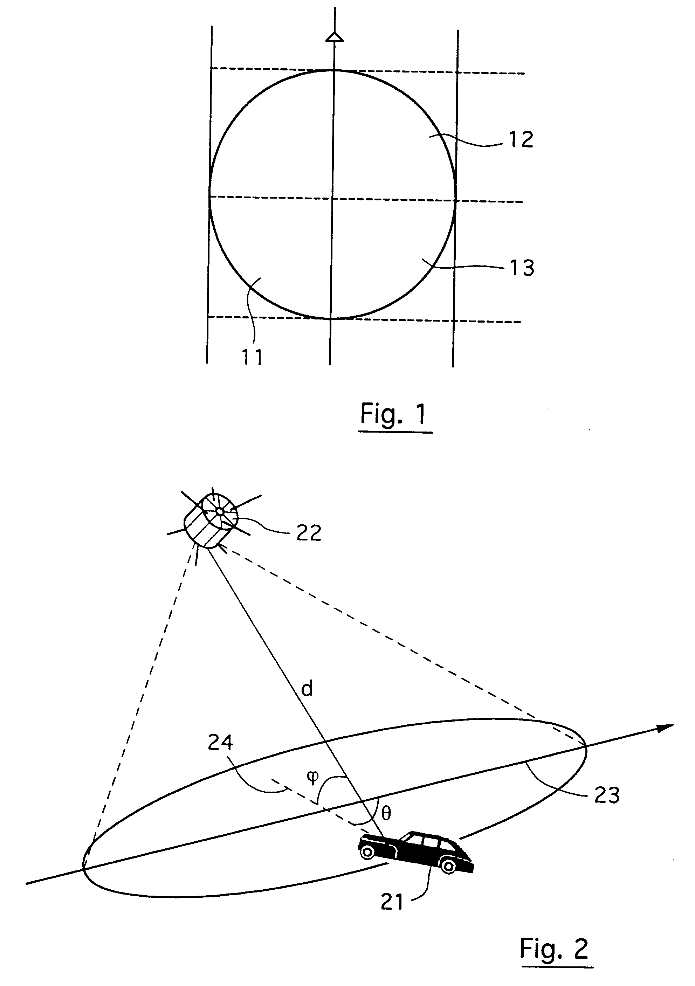

La zone de couverture radioélectrique du satellite est illustrée en figure 1. Elle peut être décrite en première approximation par un disque 11 présentant un demi-disque supérieur 12 et un demi-disque inférieur 13.

Le demi-disque supérieur 12 définit une zone pour laquelle le signal en provenance du satellite et reçu par le terminal est affecté d'un déplacement Doppler positif (le satellite se rapproche du terminal).

Le demi-disque inférieur 13 définit une zone pour laquelle le signal en provenance du satellite et reçu par le terminal est affecté d'un déplacement Doppler négatif (le satellite s'éloigne du terminal).

Ces deux demi-disques 12 et 13 sont définis par le diamètre de Doppler nul 14, qui est perpendiculaire à la trajectoire 15 suivie par le satellite.

La figure 2 illustre les paramètres nécessaires pour localiser, de façon connue, un mobile. Il est à noter que l'invention ne concerne pas spécifiquement cette méthode de localisation, mais précisément la façon de déterminer les différents paramètres nécessaires.

En effet, on sait que la position instantanée du mobile 21 par rapport au satellite 22 défilant est entièrement définie par les trois paramètres suivants :

- la distance instantanée d entre le satellite 22 et la station mobile 21 ;
- l'élévation instantanée $\varphi$ du satellite 22 par rapport au terminal 21 ;
- l'angle $\theta$ entre les projections sur la surface terrestre de la trajectoire 23 suivie par le satellite et la direction 24 satellite - terminal.

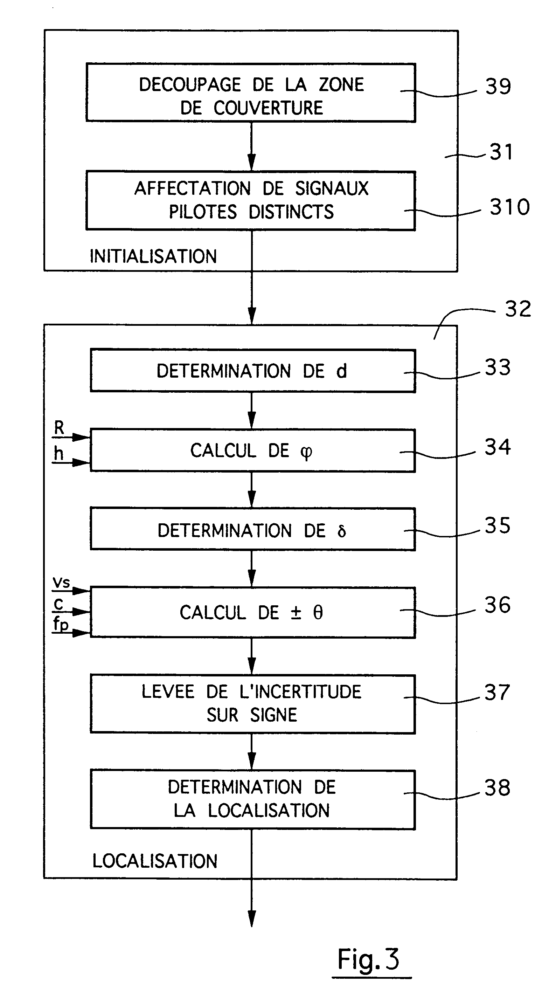

Selon l'invention, ces différents paramètres sont déterminés à l'aide du procédé illustré en figure 3.

Ce procédé comprend deux types de traitement. Tout d'abord un traitement 31 d'initialisation, réalisé une fois pour toute au niveau du satellite, et qui permet de lever l'incertitude sur le signe de $\theta$, ainsi que cela est décrit par la suite, et un traitement 32 de localisation, pouvant être réalisé à tout instant et par tout mobile équipé des moyens de traitement adéquat.

La localisation 32 d'un mobile consiste donc, selon l'invention, à déterminer la position d'un mobile à partir des signaux émis par un satellite unique.

Pour cela, le procédé comprend tout d'abord une étape 33 de détermination de la distance d entre le satellite et la station mobile.

De façon classique, cette détermination peut être obtenue, par exemple, en mesurant le délai de propagation d'un signal transmis entre le satellite et le terminal.

Ensuite, on calcule (34) l'élévation instantanée $\phi$ du satellite par rapport au termina, à partir de d, du rayon terrestre R et de l'altitude h du satellite. Ces données R et h sont connues du terminal mobile, si celui-ci effectue lui-même tous les traitements de localisation. Plus généralement, dans ce cas, celui-ci connaît les éphémérides du satellite considéré.

Afin de limiter la complexité du terminal, l'essentiel du traitement concernant la détermination de la position de la station mobile peut également être accompli par la station terrienne correspondante.

Par ailleurs, on détermine le déplacement Doppler $\delta$. Cette opération est effectuée par la station mobile lors de la synchronisation initiale, et ensuite à intervalles réguliers. Une méthode de détermination du déplacement Doppler sera décrite ultérieurement.

Selon cette technique, le satellite émet un signal pilote comprenant des éléments de signaux temporellement symétriques, et par exemple au moins une première séquence numérique pseudo-aléatoire de synchronisation x(0) à x(N-1), et, périodiquement, au moins une seconde séquence numérique x(N-1) à x(0), correspondant à l'inverse, obtenu par symétrie temporelle, de ladite première séquence.

Cette structure de signal permet, après analyse adéquate, de récupérer la référence temporelle de la station de base et de mesurer le déplacement Doppler.

On sait que le déplacement Doppler $\delta$ correspond à :

$$\delta = v_s/c.f_p.\cos(\theta).\cos(\varphi)$$

où :

$v_s$ est la vitesse de défilement du satellite ;
c est la célérité de la lumière ;
$f_p$ est la fréquence porteuse.

Ces trois informations sont connues du terminal. Il est donc possible de calculer (36) cos ($\theta$) à partir de l'équation (1) et donc $\theta$, en valeur absolue.

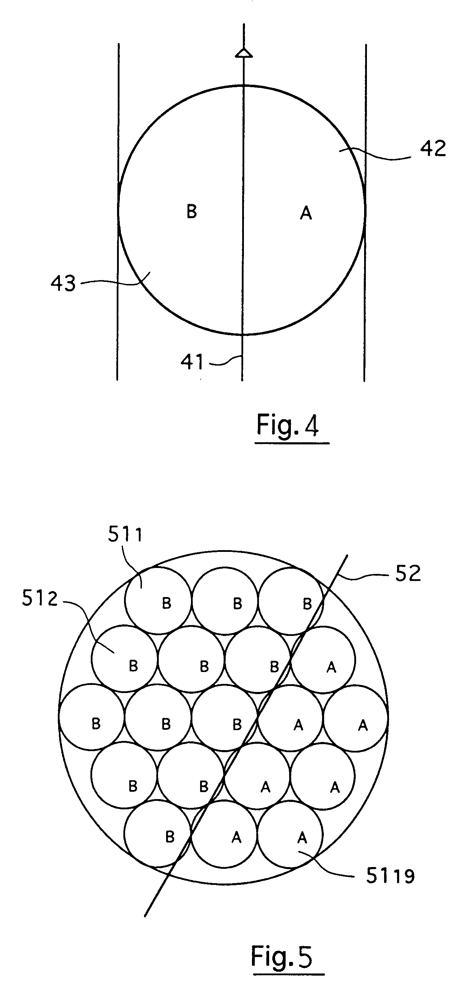

Il reste donc une incertitude sur le signe de $\theta$. Selon une caractéristique importante de l'invention, cette incertitude peut être levée par l'emploi de deux signaux pilote spécifiques A et B et en découpant la zone de couverture radioélectrique en deux zones relativement à la trajectoire du satellite, ainsi que cela est illustré en figure 4 :

- le signal de synchronisation A est diffusé uniquement sur le demi-disque à droite 42 de la trajectoire 41 ;
- le signal de synchronisation B est diffusé uniquement sur le demi-disque à gauche 43 de la trajectoire 41.

Cela correspond à l'initialisation 31, pendant laquelle la zone de couverture est découpée (39) en deux zones distinctes, auxquelles on affecte (310) des signaux de synchronisation distincts, bien sûr connus des terminaux. Dans le cas particulier du système Globalstar, on sait que la zone de couverture radioélectrique est assimilée à un disque composé de 19 faisceaux $51_1$ à $51_{19}$, ainsi que cela est illustré en figure 5.

La répartition des signaux pilote A et B se fait de façon similaire, de part et d'autre de la trajectoire 52 du satellite.

Ainsi, la localisation 32 comprend une étape 37 de levée de l'incertitude sur le signe de $\theta$, par l'analyse des caractéristiques fréquentielles su signal pilote reçu qui permet au terminal de se situer dans l'un ou l'autre des demi-disques 42 et 43.

La connaissance du triplet ($\theta$, $\varphi$, $\delta$) permet,

comme indiqué précédemment, de déterminer (38) la position de la station mobile.

Cette dernière étape est avantageusement réalisée par la station terrienne. Dans ce cas, le rôle du terminal se limite à :

- permettre la mesure du délai de propagation satellite-station mobile par la station terrienne ;
- effectuer la mesure du déplacement Doppler (signe et valeur absolue) ;
- déterminer le signal de synchronisation détecté (A ou B) ;
- transmettre ces informations à la station terrienne.

La connaissance du délai de propagation, du déplacement Doppler, du signal de synchronisation détecté, des éphémérides du satellite défilant ainsi que du rayon terrestre permet à la station terrienne de calculer la position de la station mobile, et éventuellement de lui transmettre (service de localisation).

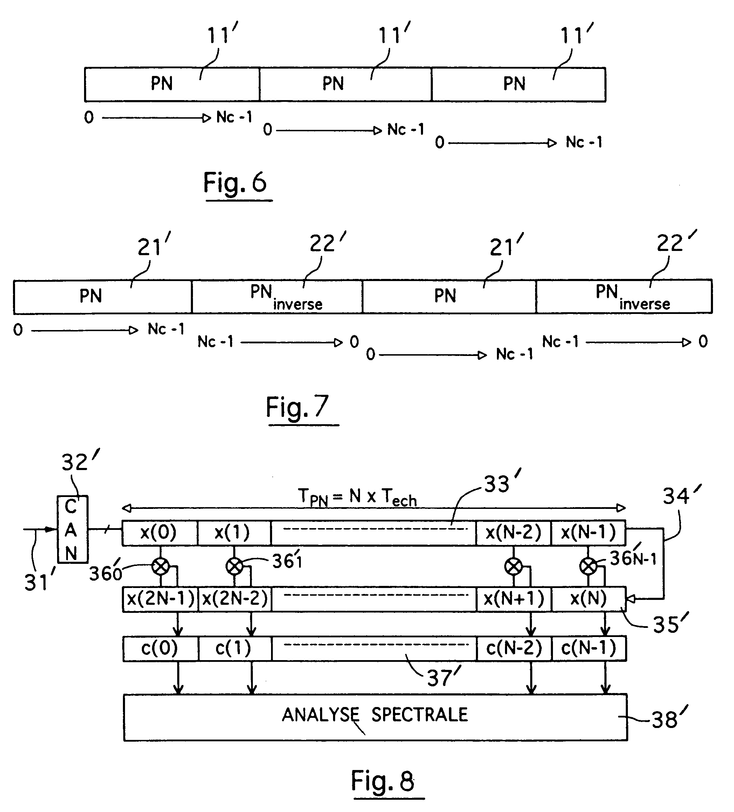

On décrit maintenant, en relation avec les figures 6 à 8, une méthode de détermination du déplacement Doppler.

La figure 6 illustre la structure d'un signal pilote de type connu pour un système AMRC tel que Globalstar. Ce signal pilote est formé par la répétition ininterrompue d'une même séquence pseudo-aléatoire (PN) 11', constituée d'une série de $N_c$ éléments binaires $12'_0$ à $12'_{Nc-1}$.

Cette séquence PN peut par exemple être une séquence de 32767 ($10^{15}$-1) bits délivrés par un polynôme générateur adéquat. Elle est connue des récepteurs, de façon que ceux-ci puissent se synchroniser en temps sur le signal reçu. La synchronisation fréquentielle est faite de façon indépendante, et aucune information fiable n'est disponible sur le déplacement Doppler.

Un nouveau signal de synchronisation, illustré en figure 7, permet d'assurer les synchronisations fréquentielle et temporelle des récepteurs.

Ce signal comprend toujours une première séquence PN(n) 21' (dite séquence directe) régulièrement transmise. Toutefois, cette première séquence 21' est remplacée à intervalles de temps réguliers par une seconde séquence PN ($N_c$-1-n) 22' (dite séquence inverse), obtenue par symétrie temporelle à partir de la première séquence PN.

Cette seconde séquence symétrique peut être réalisée au niveau binaire (inversion de l'ordre de lecture binaire), ou directement au niveau du signal modulé.

Elle est insérée régulièrement dans le signal pilote, à un rythme fonction des exigences du système (en termes de nombre de fausses détections et de déplacement Doppler acceptables, par exemple). Dans le mode de réalisation de la figure 7, les séquences transmises sont alternativement la séquence directe 21', puis la séquence inverse 22'.

La figure 8 illustre de façon schématique un dispositif de synchronisation exploitant le signal de la figure 7.

Le signal pilote reçu 31' est échantillonné par un convertisseur CAN 32', qui délivre des échantillons x(i) avec une période d'échantillonnage $T_e$.

Ces échantillons sont introduits dans un premier registre à décalage 33' comprenant N (longueur des séquences PN) cellules. La période d'échantillonnage est choisie de façon que $T_{PN}=N.T_e$ corresponde à la durée de la séquence PN.

La sortie du registre 33' est rebouclée (34') sur l'entrée d'un second registre à décalage, 35', comprenant également N cellules. Ainsi, à un instant donné :

- le registre 33' comprend les échantillons x(0) à x(N-1) ;
- le registre 35' comprend les échantillons x(N) à x(2N-1) ;

Le dispositif comprend encore des moyens de multiplication $36'_0$ à $36'_{N-1}$, réalisant chacun la multiplication de deux cellules des registres 33' et 35', de façon à délivrer N coefficients 37' c(i) tels que :

$$c(i) = x(i). x(2N-1-i)\ i\ \text{variant de 0 à N-1}$$

Ces coefficients peuvent s'écrire de la façon suivante :

$$c(nT_e) = \cos(2\pi\delta nT_e + \phi(nT_e)).\cos(2\pi\delta(2N - 1 - n)T_e + \phi((2N - 1 - n)T_e)) = 1/2.\cos(2\pi\delta(2N - 1 - n)T_e + \phi(nT_e) + \phi(2N - 1 - n)T_e)) + 1/2.\cos(4\pi\delta nT_e - 2\pi\delta(2N - 1 - n)T_e + \phi(nT_e) - \phi((2N - 1 - n)T_e))$$

Lorsque, à un instant donné, le registre à décalage 33' contient exactement une séquence directe et le registre à décalage 35' exactement une séquence inverse (on dit alors qu'il y a coïncidence), on a l'égalité suivante :

$$\phi(nT_e) = \phi[(2N - 1 - n)T_e]$$

Le signal en sortie des multiplicateurs devient alors :

$$c(nT_e) = 1/2.\cos(2\pi\delta(2N - 1 - n)T_e + 2\phi(nT_e)) + 1/2.\cos(4\pi\delta nT_e - 2\pi\delta(2N - 1 - n)T_e)$$

On vérifie aisément que :

- le premier terme est un signal à spectre étalé ;
- le second terme est une sinusoïde pure, fonction de $2\delta$.

Lorsqu'il n'y a pas coïncidence, en revanche, on n'obtient qu'un signal à spectre étalé.

La séquence de coefficients issue du multiplicateur est transmise à des moyens 38' d'analyse spectrale. Cette analyse effectuée tous les $T_e$ permet, selon des techniques classiques, de :

- acquérir la référence temporelle de la station de base, dès qu'il y a coïncidence ;
- de mesurer la valeur du déplacement Doppler, par mesure de la fréquence de la sinusoïde égale à $2\delta$.

Par ailleurs, on remarquera qu'il n'est pas obligatoire d'insérer la séquence inverse dans le signal pilote. En effet, selon un autre mode de réalisation, celle-ci peut transmise sur une autre fréquence. Dans ce cas, on transmet d'une part le signal pilote ne comprenant que la séquence directe, en permanence, et d'autre part, au moins périodiquement, la séquence inverse.

Dans ce cas, bien sûr, le dispositif de la figure 8 doit être adapté, les deux registres à décalage n'étant pas chaînés, mais alimentés chacun indépendamment par chaque séquence.

Plus généralement, d'autres structures de ce dispositif sont possibles, dès lors qu'on effectue le calcul des coefficients c(i) puis leur analyse.

## Revendications

1. Procédé de radiolocalisation géographique d'une station mobile (21) évoluant à l'intérieur de la zone de couverture radioélectrique d'un satellite (22), caractérisé en ce qu'il comprend les étapes suivantes :
   - détermination (33) de la distance instantanée d entre ledit satellite et ladite station mobile ;
   - calcul de (34) l'angle $\varphi$ d'élévation instantanée dudit satellite, à partir de ladite distance instantanée d, de l'altitude h du satellite et du rayon terrestre R ;
   - détermination (35) du déplacement Doppler $\delta$ ;
   - calcul (36) de l'angle $\theta$ entre les projections sur la surface terrestre de la trajectoire (23) suivie par ledit satellite et de la droite (24) passant par ledit satellite et ladite station mobile, à partir dudit déplacement Doppler $\delta$ et dudit angle $\varphi$ d'élévation instantanée ;
   - détermination (38) de la localisation de ladite station mobile, à partir de ladite distance instantanée d, dudit angle $\varphi$ d'élévation instantanée et dudit angle $\theta$.

2. Procédé selon la revendication 1, caractérisé en ce que ladite étape de calcul de l'angle $\theta$ comprend les étapes suivantes :
   - calcul (36) de la valeur de cos($\theta$), à partir de l'équation du déplacement Doppler :
     $$\delta = v_s/c.f_p.\cos(\theta).\cos(\varphi)$$
     où : $v_s$ est la vitesse de défilement du satellite ;
     c est la célérité de la lumière ;
     $f_p$ est la fréquence porteuse du signal transmis ; et
   - levée (37) de l'incertitude sur le signe dudit angle $\theta$.

3. Procédé selon la revendication 2, caractérisé en ce qu'il comprend de plus les étapes suivantes :
   - découpage (39) de ladite zone de couverture radioélectrique en deux régions distinctes (42, 43), une première région correspondant à une valeur positive de $\theta$ et une seconde région correspondant à une valeur négative de $\theta$ ;
   - affectation d'un signal de synchronisation distinct (A, B) à chacune desdites régions (42, 43),

   et en ce que ladite étape (37) de levée de l'incertitude comprend une étape d'analyse du signal de synchronisation reçu, de façon à déterminer la région dans laquelle se trouve ladite station mobile, et donc le signe de $\theta$.

4. Procédé selon la revendication 3, caractérisé en ce que la séparation entre lesdites régions (42, 43) est définie par la trajectoire (41) dudit satellite.

5. Procédé selon l'une quelconque des revendications 1 à 4, caractérisé en ce que ladite étape (33) de détermination de la distance instantanée d comprend une étape de mesure du temps de propagation d'un signal transmis entre ledit satellite et ladite station mobile.

6. Procédé selon l'une quelconque des revendications 1 à 5, caractérisé en ce que ladite étape (35) de détermination du déplacement Doppler $\delta$ est réalisée à l'aide d'un signal pilote constitué par la juxtaposition de deux éléments de signaux d'égales durées et temporellement symétriques.

7. Procédé selon l'une quelconque des revendications 1 à 6, caractérisé en ce que ledit satellite (22) assure un service de radiotéléphonie.

8. Procédé selon l'une quelconque des revendications 1 à 7, caractérisé en ce que ledit satellite (22) répond aux normes du système Globalstar.

9. Dispositif de radiolocalisation d'une station mobile, caractérisé en ce qu'il met en oeuvre le procédé selon l'une quelconque des revendications 1 à 8.

10. Procédé d'émission de signaux numériques à partir d'un satellite (22), caractérisé en ce qu'il comprend les étapes suivantes :
    - découpage (39) de ladite zone de couverture radioélectrique en deux régions distinctes (42, 43), de part et d'autre de la trajectoire dudit satellite ;
    - affectation (310) d'un signal de synchronisation distinct à chacune desdites régions (42, 43).

Fig. 1

Fig. 2

| DECOUPAGE DE LA ZONE DE COUVERTURE | 39 |

INITIALISATION — 31

AFFECTATION DE SIGNAUX PILOTES DISTINCTS — 310

32

DETERMINATION DE d — 33

R
h
CALCUL DE $\varphi$ — 34

DETERMINATION DE $\delta$ — 35

Vs
c
fp
CALCUL DE $\pm \theta$ — 36

LEVEE DE L'INCERTITUDE SUR SIGNE — 37

DETERMINATION DE LA LOCALISATION — 38

LOCALISATION

Fig. 3

Fig. 4

Fig. 5

| PN | PN | PN |
|---|---|---|

0 ————→ Nc -1   0 ————→ Nc -1   0 ————→ Nc -1

11'   11'   11'

Fig. 6

| PN | PN$_{inverse}$ | PN | PN$_{inverse}$ |
|---|---|---|---|

0 ———→ Nc -1   Nc -1 ———→ 0   0 ———→ Nc -1   Nc -1 ———→ 0

21'   22'   21'   22'

Fig. 7

$T_{PN} = N \times T_{ech}$

32'   33'   34'

CAN

| x(0) | x(1) | ———————————— | x(N-2) | x(N-1) |

360   361   36N-1

| x(2N-1) | x(2N-2) | ———————————— | x(N+1) | x(N) |

35'

| c(0) | c(1) | ———————————— | c(N-2) | c(N-1) |

37'

ANALYSE SPECTRALE

38'

31'

Fig. 8

**Office européen des brevets**

# RAPPORT DE RECHERCHE EUROPEENNE

Numero de la demande

EP 95 40 1437

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PROCEEDINGS OF THE IEEE, vol. 60, no. 5, Mai 1972 NEW YORK US, pages 564-571, EHRLICH 'The Role of Time-Frequency in Satellite Position Determination Systems' * page 564, colonne de droite, ligne 37 - ligne 48; tableaux 1,2 * | 1 | G01S5/12 H04Q7/38 |
| A | US,A,4 386 355 (DREW ET AL) * colonne 2, ligne 51 - colonne 4, ligne 36; figures 1,2 * | 1 | |
| A | EP,A,0 250 105 (SIGNAL PROCESSORS LIMITED) * abrégé; figure 4 * | 1 | |
| | | | **DOMAINES TECHNIQUES RECHERCHES (Int.Cl.6)** |
| | | | G01S H04Q |

Le présent rapport a été établi pour toutes les revendications

| Lieu de la recherche | Date d'achèvement de la recherche | Examinateur |
|---|---|---|
| LA HAYE | 30 Août 1995 | Haffner, R |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)